# EUROPEAN PATENT APPLICATION

(11) **EP 4 621 517 A1**
(43) Date of publication of application: **24.09.2025**
(21) Application number: 25163963.9
(22) Date of filing: 14.03.2025
(51) Int. Cl.: G05D 1/242, G05D 1/622, G05D 1/667, G05D 105/28, G05D 107/70, G05D 109/10, G05D 111/10

(54) **MOBILE ROBOT APPARATUS, SYSTEM, AND METHOD**

(30) Priority: 20.03.2024 US 202463567813 P; 26.09.2024 US 202418897944
(71) Applicant: Intel Corporation, Santa Clara, CA 95054 (US)
(72) Inventor: VAYNBERG, Mark, 4906454 Petah Tikva (IL); VITZRABIN, Efraim, 5545056 Kiryat Ono (IL); HOROVITZ, Dan, 7578229 Rishon Lezion (IL)
(74) Representative: 2SPL Patentanwälte PartG mbB

(57) **Abstract**

For example, a processor of a mobile robot, e.g., a processor implemented by a safety sensor of the mobile robot, may configured to identify an intended object to be carried by the mobile robot. For example, the processor may be configured to determine whether the intended object is detected based, for example, on sensor information from at least one sensor of the mobile robot. For example, the processor may be configured to configure a safety zone for the mobile robot based on one or more attributes of the intended object, for example, based on a determination that the intended object is detected.

## Description

### CROSS REFERENCE

This Application claims the benefit of and priority from US Provisional Patent Application No. 63/567,813 entitled "MOBILE ROBOT APPARATUS, SYSTEM, AND METHOD", filed March 20, 2024, the entire disclosure of which is incorporated herein by reference.

### BACKGROUND

Mobile robots may include automatic machines, which may have the capability to move around in their environment.

In one example, a mobile robot may be implemented as an Automated Guided Vehicle (AGV), which may be configured to follow fixed paths or tracks, for example, for transportation of products.

In another example, a robot may be implemented as an Autonomous Mobile Robot (AMR), which may be configured to operate autonomously and to navigate in an uncontrolled environment, e.g., without the need for fixed paths or tracks.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a mobile robot configured to carry a pedestal, in accordance with some demonstrative aspects.
Fig. 2 is a schematic block diagram illustration of a mobile robot implementing a safety sensor, in accordance with some demonstrative aspects.
Fig. 3 is a schematic illustration of detection zones corresponding to two pedestals, in accordance with some demonstrative aspects.
Fig. 4 is a schematic illustration of a fixed safety zone definition, to illustrate one or more technical aspects, which may be handled in accordance with some demonstrative aspects.
Fig. 5 is a schematic illustration of operations and communications performed by a controller and a safety sensor of a mobile robot, in accordance with some demonstrative aspects.
Fig. 6 is a schematic illustration of a configurable safety-zone, in accordance with some demonstrative aspects.
Fig. 7 is a schematic flow-chart illustration of a method of verifying attributes of an object to be carried by a mobile robot, in accordance with some demonstrative aspects.
Fig. 8 is a schematic flow-chart illustration of a method of detecting attributes of an object to be carried by a mobile robot, in accordance with some demonstrative aspects.
Fig. 9 is a schematic flow-chart illustration of training an object attribute detector, in accordance with some demonstrative aspects.
Fig. 10 is a schematic flow-chart illustration of a method of configuring a safety zone for a mobile robot, in accordance with some demonstrative aspects.
Fig. 11 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

The words "exemplary" and "demonstrative" are used herein to mean "serving as an example, instance, demonstration, or illustration". Any aspect, or design described herein as "exemplary" or "demonstrative" is not necessarily to be construed as preferred or advantageous over other aspects, or designs.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

The phrases "at least one" and "one or more" may be understood to include a numerical quantity greater than or equal to one, e.g., one, two, three, four, [...], etc. The phrase "at least one of" with regard to a group of elements may be used herein to mean at least one element from the group consisting of the elements. For example, the phrase "at least one of" with regard to a group of elements may be used herein to mean one of the listed elements, a plurality of one of the listed elements, a plurality of individual listed elements, or a plurality of a multiple of individual listed elements.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and/or may represent any information as understood in the art.

The terms "processor" or "controller" may be understood to include any kind of technological entity that allows handling of any suitable type of data and/or information. The data and/or information may be handled according to one or more specific functions executed by the processor or controller. Further, a processor or a controller may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), and the like, or any combination thereof. Any other kind of implementation of the respective functions, which will be described below in further detail, may also be understood as a processor, controller, or logic circuit. It is understood that any two (or more) processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The term "memory" is understood as a computer-readable medium (e.g., a non-transitory computer-readable medium) in which data or information can be stored for retrieval. References to "memory" may thus be understood as referring to volatile or non-volatile memory, including random access memory (RAM), read-only memory (ROM), flash memory, solid-state storage among others, or any combination thereof. Registers, shift registers, processor registers, data buffers, among others, are also embraced herein by the term memory. The term "software" may be used to refer to any type of executable instruction and/or logic, including firmware, which may be stored, for example, by a memory.

As used herein, the term "circuitry" may refer to, be part of, or include, an Application Specific Integrated Circuit (ASIC), an integrated circuit, an electronic circuit, a processor (shared, dedicated, or group), and/or memory (shared, dedicated, or group), that execute one or more software or firmware programs, a combinational logic circuit, and/or other suitable hardware components that provide the described functionality. In some aspects, some functions associated with the circuitry may be implemented by one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g., radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and/or the like. Logic may be executed by one or more processors using memory, e.g., registers, buffers, stacks, and the like, coupled to the one or more processors, e.g., as necessary to execute the logic.

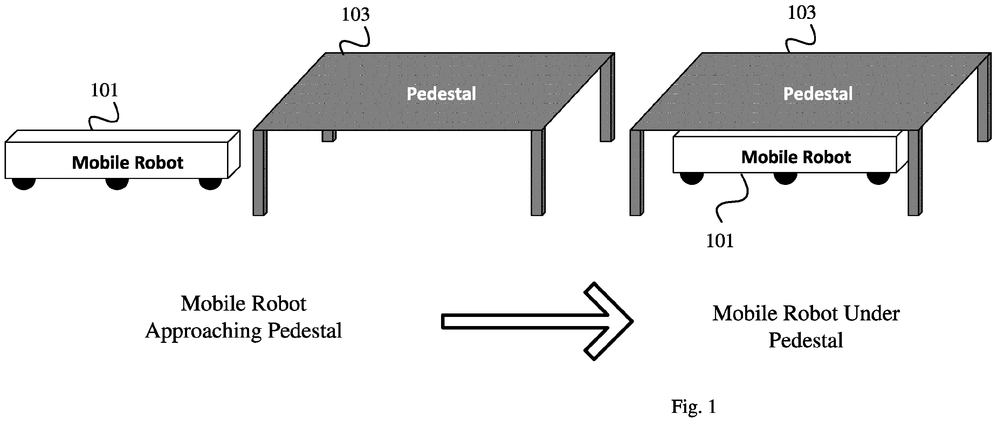

Reference is now made to Fig. 1, which schematically illustrates a mobile robot 101 configured to carry a pedestal 103, in accordance with some demonstrative aspects.

In some demonstrative aspects, the pedestal 103 may be configured to support one or more objects and/or items to be carried by the mobile robot 101, for example, from one place to another.

In some demonstrative aspects, the mobile robot 101 may include an Autonomous Mobile Robot (AMR), which may be configured to operate autonomously and to navigate in an uncontrolled environment, e.g., without the need for fixed paths or tracks.

In other aspects, the mobile robot 101 may include an Automated Guided Vehicle (AGV), which may be configured to follow fixed paths or tracks, for example, for transportation of products.

In other aspects, the mobile robot 101 may include any other suitable type of robot, which may have the capability to move around in an environment.

In some demonstrative aspects, as shown in Fig. 1, the mobile robot 101 may be configured to carry a pedestal 103, which may be bigger than an actual size of the mobile robot 101.

In some demonstrative aspects, as shown in Fig. 1, the mobile robot 101 may be configured to position itself under a pedestal 103 to be moved by the mobile robot.

For example, as shown in Fig. 1, the mobile robot 101 may move under the pedestal 103, e.g., between legs of the pedestal 103.

For example, as shown in Fig. 1, the mobile robot 101 may have a height, which may be lower than a height of the legs of the pedestal 103, e.g., to allow the mobile robot 101 to fit under the pedestal 103.

In some demonstrative aspects, the mobile robot 101 may be utilized to carry pedestals 103 of different types, for example, having different shapes and/or sizes, e.g., as described below.

Some demonstrative aspects are described herein with respect to a mobile robot, e.g., mobile robot 101, configured to carry a pedestal, e.g., pedestal 103.

In other aspects, the mobile robot 101 may be configured to carry any other additional or alternative types of objects. For example, one or more, e.g., some or all, of the operations and/or functionalities described herein with respect to pedestals may be implemented with respect to a shelve, a base, and/or any other suitable object and/or item to be carried by the mobile robot.

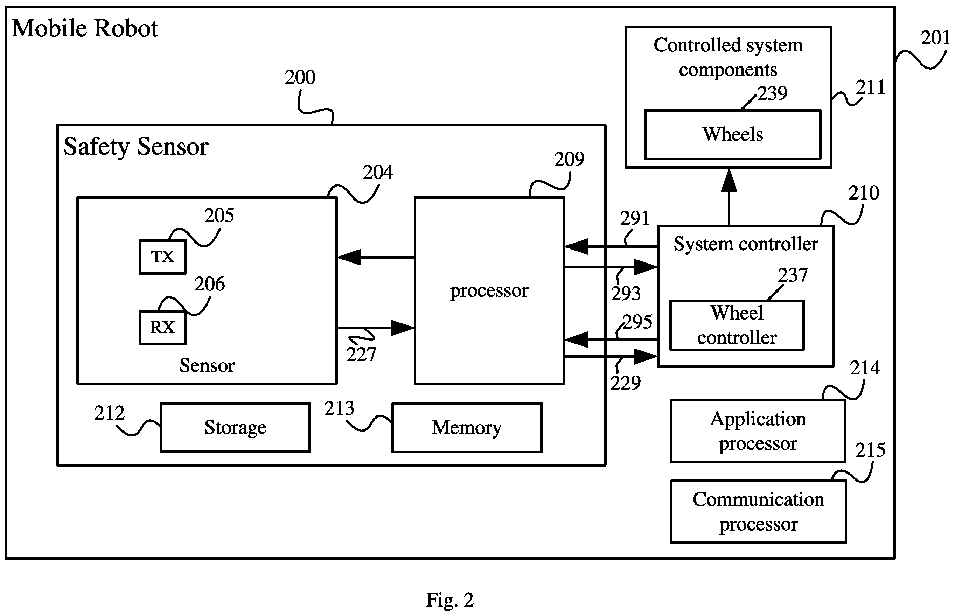

Reference is made to Fig. 2, which schematically illustrates a mobile robot 201 implementing a safety sensor 200, in accordance with some demonstrative aspects.

For example, one or more elements of mobile robot 201 may be implemented as part of, and/or may configured to perform one or more operations and/or functionalities of, the mobile robot 101 (Fig. 1).

In some demonstrative aspects, mobile robot 201 may include an AMR, which may be configured to operate autonomously and to navigate in an uncontrolled environment, e.g., without the need for fixed paths or tracks.

**In** other aspects, mobile robot 201 may include an AGV, which may be configured to follow fixed paths or tracks, for example, for transportation of products.

**In** other aspects, the mobile robot 201 may include any other suitable type of robot, which may have the capability to move around in an environment.

**In** some demonstrative aspects, safety sensor 200 may include at least one sensor 204, which may be configured to provide sensor information 227 corresponding to the environment of the mobile robot 201.

**In** some demonstrative aspects, the at least one sensor 204 may include a light-based sensor 204, e.g., as described below.

**In** some demonstrative aspects, the light-based sensor 204 may include a Light Detection and Ranging (LiDAR) sensor.

In other aspects, the light-based sensor 204 may include any other additional type of light-based sensor configured to generate light-based sensor information based on sensed and/or detected light.

In some demonstrative aspects, as shown in Fig. 2, light-based sensor 204 may include a light transmitter (Tx) 205 and a light receiver (Rx) 206.

In some demonstrative aspects, light transmitter 205 may include one or more elements, for example, a light source, optic elements, and/or one or more other elements, configured to generate light signals to be emitted by the light-based sensor 204.

In some demonstrative aspects, safety sensor device 200 may include a processor 209.

In some demonstrative aspects, processor 209 may include, or may be implemented, partially or entirely, by circuitry and/or logic, e.g., one or more processors including circuitry and/or logic, memory circuitry and/or logic. Additionally or alternatively, one or more functionalities of processor 209 may be implemented by logic, which may be executed by a machine and/or one or more processors, e.g., as described below.

In some demonstrative aspects, safety sensor 200 may include at least one memory 213, for example, to store data processed by processor 209.

In some demonstrative aspects, processor 209 may include an input to receive input information to be processed by processor 209, e.g., as described below. For example, the input of the processor 209 may include any suitable input interface, input unit, input module, input component, input circuitry, memory interface, memory access unit, memory reader, digital memory unit, bus interface, processor interface, or the like, which may be capable of receiving the input information to be processed by processor 209, e.g., from a memory, a processor, and/or any other suitable component to provide the input information to be processed by processor 209.

In some demonstrative aspects, processor 209 may include an output to provide output information processed by the processor 209, e.g., as described below. For example, the output of the processor 209 may include any suitable output interface, output unit, output module, output component, output circuitry, memory interface, memory access unit, memory writer, digital memory unit, bus interface, processor interface, or the like, which may be capable of outputting the output information from the processor 209 to a memory, a processor, and/or any other suitable component to handle the output information from the processor 209.

In some demonstrative aspects, for example, processor 209 may provide digital transmit data values to the light-based sensor 204.

In some demonstrative aspects, light receiver 206 may include one or more elements, for example, one or more photo detectors, one or optical elements and/or one or more other elements, configured to detect and/or process, light signals received by light receiver 206.

In some demonstrative aspects, for example, light receiver 206 may be configured to convert a detected light signal into digital reception data values based on the detected light. For example, light-based sensor 204 may provide the sensor information 227 to the processor 209, for example, based on the digital reception data values.

In some demonstrative aspects, safety sensor 200 may include a light-based sensor 204, e.g., as described above.

In other aspects, safety sensor 200 may include any other additional or alternative type of sensor 204, e.g., instead of the light-based sensor, or in addition to the light-based sensor.

In one example, safety sensor 200 may include an image-based sensor 204, which may utilize one or more image-capturing devices, e.g., cameras. For example, the image-based sensor 204 may include one or more cameras, which may be configured to capture images from an environment of the mobile robot 201. For example, the image-based sensor 204 may be configured to provide the sensor information 227 to the processor 209, for example, based on the images captured by the cameras.

In another example, safety sensor 200 may include a radar-based sensor 204, which may utilize one or more radar devices. For example, the radar-based sensor 204 may include one or more radar transmitters 205, which may be configured to transmit radar signals, and one or more radar receivers 206, which may be configured to receive radar signals, for example, based on the transmitted radar signals. For example, the radar-based sensor 204 may be configured to provide the sensor information 227 to the processor 209, for example, based on the received radar signals.

In some demonstrative aspects, processor 209 may be configured to process the sensor information 227 from one or more sensos 204, for example, to detect one or more objects, e.g., in an environment of the mobile robot 201.

In one example, processor 209 may be configured to process the sensor information 227, for example, to detect the presence of one or more objects within a safety zone, e.g., as described below.

In another example, processor 209 may be configured to process the sensor information 227, for example, to determine information including one or more of range, speed, direction, and/or any other information, of one or more objects, e.g., with respect to the mobile robot 201.

In some demonstrative aspects, processor 209 may be configured to provide safety information 229 to a controller (also referred to as "system controller") 210 of mobile robot 201, e.g., as described below.

In some demonstrative aspects, processor 209 may be configured to determine the safety information 229, for example, based on the sensor information 227, e.g., as described below.

In some demonstrative aspects, system controller 210 may be configured to control one or more controlled system components 211 of the mobile robot 201, e.g., a motor, a brake, a steering system, and the like, e.g. by one or more corresponding actuators.

In some demonstrative aspects, controller 210 may include a wheel controller 237, which may be configured to control one or more wheels 239 of the mobile robot 201, e.g., as described below.

In some demonstrative aspects, wheel controller 237 may be configured to control one or more wheels 239 of the mobile robot 201, for example, based on the safety information 229, e.g., as described below.

For example, wheel controller 237 may be configured to control one or more actuators, e.g., motors, to control the speed of the one or more wheels 239, for example, based on the safety information 229.

In one example, the controller 210 may be configured to control a speed of the mobile robot 201, for example, based on whether or not an object is detected within the safety zone.

For example, the controller 210 may be configured to cause the mobile robot to slow down, or to stop, for example, based on a determination that an object is detected within the safety zone.

For example, the controller 210 may be configured to cause the mobile robot to begin moving or to increase speed, for example, based on a determination that there is no object detected within the safety zone.

In some demonstrative aspects, safety sensor 200 may include a storage 212 or a memory 213, e.g., to store information processed by safety sensor 200, for example, digital reception data values being processed by the processor 209, sensor information 227 generated by processor 209, and/or any other data generated by, and/or to be processed by, processor 209.

In some demonstrative aspects, mobile robot 201 may include, for example, an application processor 214 and/or a communication processor 215, for example, to at least partially implement one or more functionalities of system controller 210 and/or to perform communication between system controller 210, sensor 200, the controlled system components 211, and/or one or more additional elements of mobile robot 201, and/or one or more other devices or systems.

In some demonstrative aspects, safety sensor 200 may be configured to implement one or more operations and/or functionalities of a safety zone configuration mechanism, for example, to configure a safety zone for mobile robot 201, e.g., as described below.

In some demonstrative aspects, safety sensor 200 may be configured to define the safety zone for the mobile robot 201, for example, according to a mask, which may be applied, for example, on an area which may be defined, for example, based on positions of the legs of a pedestal to be carried by the mobile robot, e.g., pedestal 103 (Fig. 1).

In some demonstrative aspects, safety sensor 200 implement the safety zone configuration mechanism, which may be configured to provide a technical solution to support a dynamic configuration of the safety zone for mobile robot 201, e.g., as described below.

In some demonstrative aspects, safety sensor 200 implement the safety zone configuration mechanism, which may be configured to provide a technical solution to support a configuration of the safety zone for mobile robot 201, for example, based on one or more attributes of an object, e.g., a pedestal or any other object, to be carried by the mobile robot 201, e.g., as described below.

In some demonstrative aspects, safety sensor 200 implement the safety zone configuration mechanism, which may be configured to provide a technical solution to support a configuration of the safety zone for mobile robot 201, for example, based on a type of an object, e.g., a pedestal or any other object, to be carried by the mobile robot 201, e.g., as described below.

In some demonstrative aspects, safety sensor 200 implement the safety zone configuration mechanism, which may be configured to provide a technical solution to support a configuration of the safety zone for mobile robot 201, for example, based on a size of an object, e.g., a pedestal or any other object, to be carried by the mobile robot 201, e.g., as described below.

In some demonstrative aspects, safety sensor 200 implement the safety zone configuration mechanism, which may be configured to provide a technical solution to support a configuration of the safety zone for mobile robot 201, for example, based on a shape of an object, e.g., a pedestal or any other object, to be carried by the mobile robot 201, e.g., as described below.

In some demonstrative aspects, safety sensor 200 implement the safety zone configuration mechanism, which may be configured to provide a technical solution to ensure that a configuration of the safety zone for mobile robot 201 is configured according to an actual object, e.g., an actual pedestal or any other object, to be carried by the mobile robot 201, e.g., as described below.

In some demonstrative aspects, safety sensor 200 implement the safety zone configuration mechanism, which may be configured to provide a technical solution to avoid an erroneous configuration of the safety zone for mobile robot 201, for example, which may not correspond to an actual object, e.g., an actual pedestal or any other object, to be carried by the mobile robot 201, e.g., as described below.

In some demonstrative aspects, safety sensor 200 implement the safety zone configuration mechanism, which may be configured to provide a technical solution to configure the safety zone for mobile robot 201 according to safety zone dimensions, which may be sufficient, for example, to maintain safety requirements with respect to an actual pedestal to be carried by the mobile robot 201, e.g., as described below.

In some demonstrative aspects, safety sensor 200 implement the safety zone configuration mechanism, which may be configured to provide a technical solution to configure the safety zone for mobile robot 201 according to safety zone dimensions, which may not substantially exceed safety zone dimensions, which may be sufficient, for example, to maintain safety requirements with respect to an actual object, e.g., an actual pedestal or any other object, to be carried by the mobile robot 201, e.g., as described below.

In some demonstrative aspects, safety sensor 200 implement the safety zone configuration mechanism, which may be configured to provide a technical solution to support a substantially optimal configuration of the safety zone for mobile robot 201, for example, according to an actual object, e.g., an actual pedestal or any other object, to be carried by the mobile robot 201, e.g., as described below.

In some demonstrative aspects, for example, in some use cases, scenarios, implementations and/or deployments, a mobile robot, e.g., mobile robot 201, may operate in an environment, which may include objects, for example, pedestals and/or any other objects, of multiple different types, sizes and/or shapes, e.g., which may exist within a same area.

For example, in some use cases, scenarios and/or implementations, configuring a safety zone for a mobile robot based on dimensions of a largest possible pedestal, which may be used in an environment of the mobile robot, may result in one or more technical issues, e.g., as described below.

For example, configuring the safety zone of the mobile robot based on the dimensions of the largest possible pedestal may result in unnecessary limitations and/or restrictions being imposed on the mobile robot.

For example, configuring the safety zone of the mobile robot based on the dimensions of the largest possible pedestal may result in a situation where the mobile robot may not be allowed to move in a relatively narrow passage, e.g., which may be narrow compared to the dimensions of the largest pedestal, for example, even in case the mobile robot is actually carrying a relatively small pedestal, e.g., which would otherwise fit in the relatively narrow passage.

For example, configuring the safety zone of the mobile robot based on the dimensions of the largest possible pedestal may result in a situation where the mobile robot may be limited to relatively low speeds, e.g., which may correspond to the dimensions of the largest pedestal, for example, even in case the mobile robot is actually carrying a relatively small pedestal, e.g., which would otherwise be allowed to be carried with a higher speed.

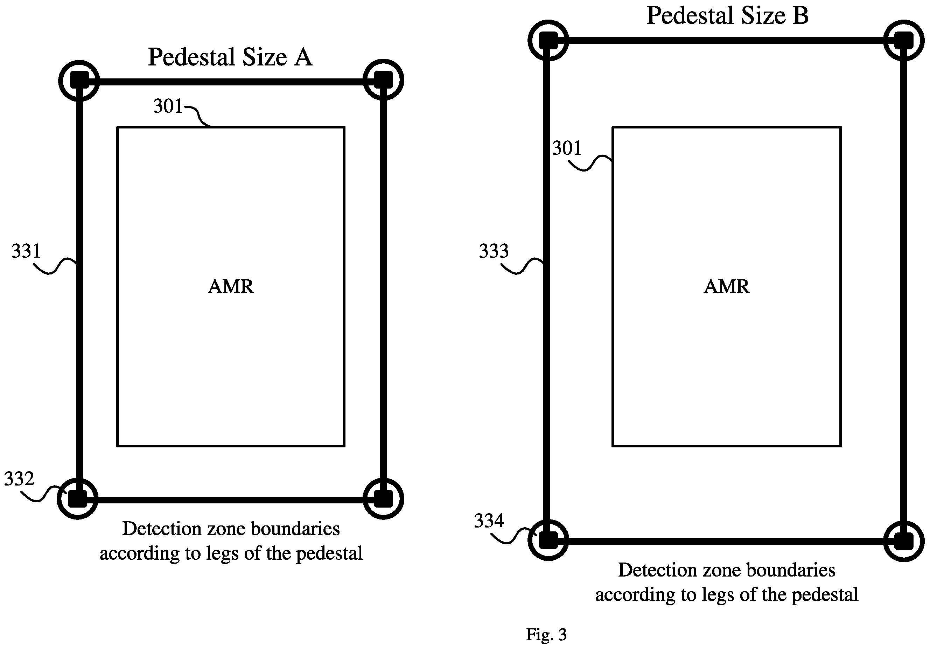

Reference is made to Fig. 3, which schematically illustrates detection zones corresponding to two pedestals, in accordance with some demonstrative aspects.

For example, as shown in Fig. 3, a mobile robot 301, e.g., mobile robot 101 (Fig. 1), for example, an AMR, may be capable of carrying a first pedestal, which may have a first pedestal size ("A"), and a second pedestal, which may have a second pedestal size ("B"), for example, larger than the pedestal size "A".

For example, in case the mobile robot 301, e.g., mobile robot 101 (Fig. 1), is to carry different pedestals that are bigger than the actual size of the mobile robot 301, a safety sensor mask may be applied, for example, based on locations of the legs of the pedestal, e.g., the pedestal 103 (Fig. 1).

For example, as shown in Fig. 3, an actual detection zone 331 corresponding to the first pedestal may be based, for example, on the actual dimensions (A) of the first pedestal. For example, the actual detection zone 331 corresponding to the first pedestal may be based, for example, on the actual locations of the legs 332 of the first pedestal, e.g., at the four corners of the first pedestal.

For example, as shown in Fig. 3, an actual detection zone 333 corresponding to the second pedestal may be based, for example, on the actual dimensions (B) of the second pedestal. For example, the actual detection zone 333 corresponding to the second pedestal may be based, for example, on the actual locations of the legs 334 of the second pedestal, e.g., at the four corners of the second pedestal.

For example, as shown in Fig. 3, the actual detection zone 331 corresponding to the first pedestal may be smaller, e.g., much smaller, than actual detection zone 333 corresponding to the second pedestal.

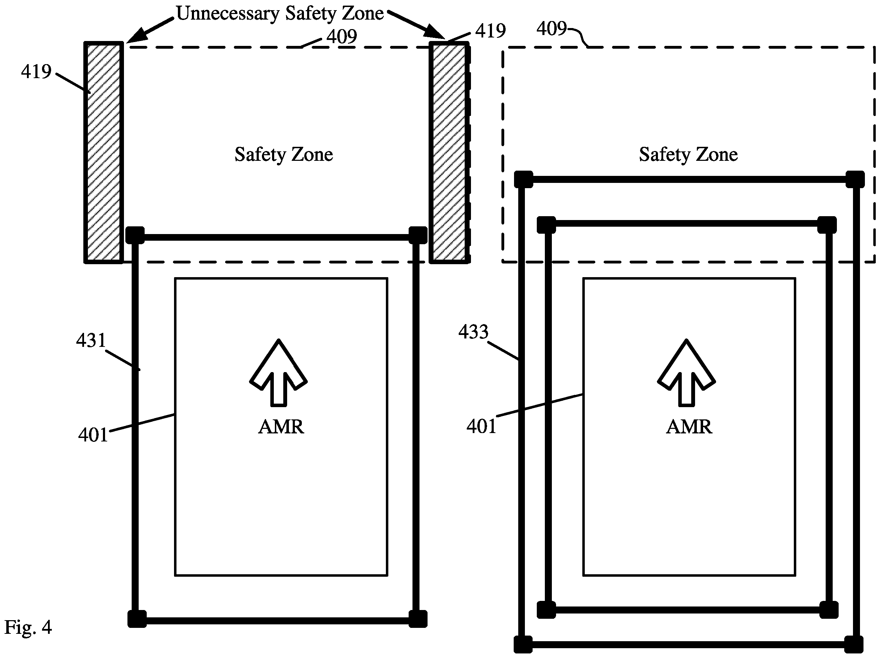

Reference is also made to Fig. 4, which schematically illustrates a same, e.g., fixed, safety zone definition 409 applied to the two pedestals of Fig. 3, to illustrate one or more technical aspects, which may be handled in accordance with some demonstrative aspects.

For example, in some use cases, scenarios, and/or implementations, it may be disadvantageous to configure a safety sensor to utilize a same, e.g., fixed, safety zone 409 to be applied for all types and/or sizes of pedestals.

For example, as shown in Fig. 4, configuring the safety zone 409 of a mobile robot 401 based on the dimensions 433 of the largest possible pedestal, e.g., based on the dimensions (B) of the second pedestal, may result in an inaccurate safety zone applied to pedestals with a smaller size 431, e.g., pedestals having the dimensions (A) of the first pedestal.

For example, as shown in Fig. 4, configuring the safety zone 409 of the mobile robot 401 based on the dimensions 433 of the largest possible pedestal, e.g., based on the dimensions (B) of the second pedestal, may result in applying a larger-than-needed (unnecessary) safety zone 419 to pedestals with a smaller size 431, e.g., the dimensions (A) of the first pedestal.

For example, as shown in Fig. 4, configuring the safety zone 409 of the mobile robot 401 based on the dimensions 433 of the largest possible pedestal, e.g., based on the dimensions (B) of the second pedestal, may result in applying a safety zone over areas (unnecessary areas) 419, which may actually be unnecessary with respect to pedestals with a smaller size 431, e.g., the dimensions (A) of the first pedestal.

For example, this larger-than-needed (unnecessary) safety zone 419 applied to the smaller pedestal 431 may result in unnecessary limitations being imposed on the mobile robot 401, e.g., when the mobile robot 401 is actually carrying the smaller pedestal 431.

For example, this larger-than-needed (unnecessary) safety zone 419 applied to the smaller pedestal 431 may result in degraded performance of the mobile robot 401, e.g., when the mobile robot 401 is actually carrying a smaller pedestal 41.

For example, this larger-than-needed (unnecessary) safety zone 419 applied to the smaller pedestal 431 may result in limiting the mobile robot 401, e.g., based on the dimensions (B) of the second pedestal with the larger dimensions 433, not to be allowed to drive in narrow places, for example, even in case the mobile robot 401 is actually carrying a small pedestal (A) with the smaller dimensions 431, e.g., since the safety sensor of the mobile robot 401 is configured as if it has the biggest pedestal (B).

For example, the mobile robot 401 may be allowed to move with a relatively high speed, for example, only when the mobile robot 401 is relatively far from any side objects. Accordingly, the larger-than-needed (unnecessary) safety zone 419 applied to the smaller pedestal 431 may result in limiting the speed of the mobile robot 401, e.g., based on the dimensions (B) 433 of the second pedestal, for example, even in case the mobile robot is actually carrying a small pedestal (A) with the smaller dimensions 431.

Referring back to Fig. 2, in some demonstrative aspects, safety sensor 200 may be configured to implement one or more operations and/or functionalities of a safety zone configuration mechanism, e.g., as described herein, for example, to provide a technical solution to support better mapping of the actual safety zone for the mobile robot 201, e.g., as described below.

In some demonstrative aspects, safety sensor 200 may be configured to implement one or more operations and/or functionalities of the safety zone configuration mechanism, for example, to provide a technical solution to support an improved AMR movement (maneuverability) area, for example, by supporting an improved safety zone detection, e.g., according to *ANSI R15.08 Requirements for Industrial Mobile Robots and ISO 3691-4 Driverless industrial trucks and their systems* and/or any other suitable additional or alternative requirements.

In some demonstrative aspects, safety sensor 200 may be configured to implement one or more operations and/or functionalities of the safety zone configuration mechanism, for example, to provide a technical solution to support improved flexibility in a supported pedestal variety, e.g., compared to implementations which may be limited to predefined pedestal sizes, which may be allowed to be used due to safety reasons.

In some demonstrative aspects, safety sensor 200 may be configured to identify a type of an intended object to be carried by the mobile robot 201, e.g., as described below.

In some demonstrative aspects, safety sensor 200 may be configured to determine whether the intended object is detected, for example, based on sensor information 227 from the sensor 204, e.g., as described below.

In some demonstrative aspects, safety sensor 200 may be configured to configure a safety zone for the mobile robot 201, for example, based on a determination that the intended object is detected, e.g., as described below.

In some demonstrative aspects, safety sensor 200 may be configured to configure the safety zone for the mobile robot 201, for example, based on one or more dimensions of the intended object, e.g., as described below.

In some demonstrative aspects, processor 209 may be configured to identify an intended object to be carried by the mobile robot 201, e.g., as described below.

In some demonstrative aspects, processor 209 may be configured to determine whether the intended object is detected based, for example, on the sensor information 227 from the at least one sensor 204 of the mobile robot 201, e.g., as described below.

In some demonstrative aspects, processor 209 may be configured to configure a safety zone for the mobile robot 201, for example, based on one or more attributes of the intended object, based on a determination that the intended object is detected, e.g., as described below.

In some demonstrative aspects, the intended object may include a pedestal, for example, the pedestal 103 (Fig. 1), e.g., as described below.

In some demonstrative aspects, the intended object may include a shelf.

In other aspects, the intended object may include any other suitable object, entity, element, product, or the like.

In some demonstrative aspects, processor 209 may be configured to monitor the sensor information 227, for example, to detect a hazard in the safety zone during movement of the mobile robot 201, e.g., as described below.

In some demonstrative aspects, processor 209 may be configured to generate an alert, for example, based on a determination that the hazard is detected in the safety zone. For example, processor 209 may be configured to provide the alert to the controller 210, for example, as part of, or in the form of, the safety information 229.

In some demonstrative aspects, processor 209 may be configured to configure the safety zone for the intended object to be carried by the mobile robot 201, e.g., pedestal 103 (Fig. 1), for example, based on a dimension of the intended object, e.g., as described below.

In some demonstrative aspects, processor 209 may be configured to configure the safety zone for the intended object to be carried by the mobile robot 201, e.g., pedestal 103 (Fig. 1), for example, based on a size of the intended object, e.g., as described below.

In some demonstrative aspects, processor 209 may be configured to configure the safety zone for the intended object to be carried by the mobile robot 201, e.g., pedestal 103 (Fig. 1), for example, based on a shape of the intended object, e.g., as described below.

In some demonstrative aspects, processor 209 may be configured to configure the safety zone for the intended object to be carried by the mobile robot 201, e.g., pedestal 103 (Fig. 1), for example, based on a type of the intended object, e.g., as described below.

In some demonstrative aspects, processor 209 may be configured to configure the safety zone for the intended object to be carried by the mobile robot 201, e.g., pedestal 103 (Fig. 1), for example, based on any other additional or alternative attribute of the intended object.

In some demonstrative aspects, processor 209 may be configured to configure one or more dimensions of the safety zone for the intended object to be carried by the mobile robot 201, e.g., pedestal 103 (Fig. 1), for example, based on the one or more attributes of the intended object, e.g., as described below.

In some demonstrative aspects, processor 209 may be configured to configure one or more dimensions of the safety zone for the intended object to be carried by the mobile robot 201, e.g., pedestal 103 (Fig. 1), for example, based on one or more dimensions of the intended object, e.g., as described below.

In some demonstrative aspects, processor 209 may be configured to configure a shape the safety zone for the intended object to be carried by the mobile robot 201, e.g., pedestal 103 (Fig. 1), for example, based on a shape of the intended object, e.g., as described below.

In some demonstrative aspects, processor 209 may be configured to determine that a first intended object, e.g., a first pedestal 103 (Fig. 1), is detected based on first sensor information 227, e.g., as described below.

In some demonstrative aspects, processor 209 may be configured to determine a first safety zone for the first intended object, for example, based on one or more first attributes of the first intended object, for example, based on the determination that the first intended object is detected, e.g., as described below.

In some demonstrative aspects, processor 209 may be configured to determine that a second intended object, e.g., a second pedestal 103 (Fig. 1), is detected based on second sensor information 227, e.g., as described below.

**In** some demonstrative aspects, the second intended object may be different from the first intended object, e.g., as described below.

**In** some demonstrative aspects, processor 209 may be configured to determine a second safety zone for the second intended object, for example, based on one or more second attributes of the second intended object, for example, based on the determination that the second intended object is detected, e.g., as described below.

**In** some demonstrative aspects, processor 209 may be configured to determine the second safety zone to be different from the first safety zone, e.g., as described below.

**In** some demonstrative aspects, processor 209 may be configured to identify the intended object, for example, based on object information 291 from the controller 210 of the mobile robot 201, e.g., as described below.

In some demonstrative aspects, processor 209 may be configured to process the object information 291 from the controller 210 of the mobile robot 201, for example, to identify detection criterion information to indicate, e.g., identify, represent, configure, and/or define, at least one criterion to detect the intended object, e.g., as described below.

In some demonstrative aspects, processor 209 may be configured to determine whether the intended object is detected, for example, based on whether the at least one criterion is met with respect to the sensor information 227, e.g., as described below.

In some demonstrative aspects, processor 209 may be configured to provide to the controller 210 a detection result (also referred to as "detection result indication") 293 to indicate, e.g., identify, represent, configure, and/or define, a result of an attempt to detect the intended object, e.g., as described below.

In some demonstrative aspects, processor 209 may be configured to provide the detection result indication 293 to include a detection confirmation (also referred to as "detection confirmation indication") to the controller 210, for example, based on the determination that the intended object is detected, e.g., as described below.

In some demonstrative aspects, processor 209 may be configured to provide the detection result indication 293 to include a detection error (also referred to as "detection error indication") to the controller 210, for example, based on a determination that the intended object is not detected, e.g., as described below.

In some demonstrative aspects, processor 209 may be configured to process the sensor information 227, for example, to detect one or more predefined object-identification attributes of the intended object, e.g., as described below.

In some demonstrative aspects, processor 209 may be configured to determine that the intended object is detected, for example, based on a determination that the one or more predefined object-identification attributes are detected based on the sensor information 227, e.g., as described below.

In some demonstrative aspects, the one or more predefined object-identification attributes may include one or more leg attributes of one or more legs of the intended object, for example, one or more legs of the pedestal 103 (Fig. 1), e.g., as described below.

In some demonstrative aspects, the one or more leg attributes may include a leg dimension of one or more legs of the intended object, for example, one or more legs of the pedestal 103 (Fig. 1), e.g., as described below.

In some demonstrative aspects, the one or more leg attributes may include a leg location of one or more legs of the intended object, for example, one or more legs of the pedestal 103 (Fig. 1), e.g., as described below.

In some demonstrative aspects, the one or more leg attributes may include a leg shape of one or more legs of the intended object, for example, one or more legs of the pedestal 103 (Fig. 1), e.g., as described below.

In some demonstrative aspects, the one or more leg attributes may include a leg color of one or more legs of the intended object, for example, one or more legs of the pedestal 103 (Fig. 1), e.g., as described below.

In some demonstrative aspects, the one or more leg attributes may include any other additional or alternative attributes of one or more legs of the intended object.

In some demonstrative aspects, the one or more predefined object-identification attributes may include one or more boundary attributes of one or more boundaries of the intended object, for example, one or more boundaries of the pedestal 103 (Fig. 1), e.g., as described below.

In some demonstrative aspects, processor 209 may be configured to identify the one or more predefined object-identification attributes, for example, based on the object information 291 from the controller 210, e.g., as described below.

In some demonstrative aspects, processor 209 may be configured to configure the safety zone for the intended object, for example, based on safety zone information 295 from the controller 210. For example, safety zone information 295 may include safety zone information corresponding to the intended object, e.g., as described below.

In one example, the object information 291 may include the safety zone information 295 corresponding to the intended object.

In another example, the safety zone information 295 corresponding to the intended object may be provided separately from the object information 291.

In some demonstrative aspects, processor 209 may be configured to configure the safety zone for the mobile robot 201, for example, based on safety requirements corresponding to the one or more attributes of the intended object, e.g., as described below.

In one example, the object information 291 may include information to define the safety requirements corresponding to the one or more attributes of the intended object.

In another example, safety requirements corresponding to the one or more attributes of the intended object may be predefined.

In some demonstrative aspects, one or more elements of safety sensor 200, e.g., processor 209, may be configured to implement one or more operations and/or functionalities of a safety zone configuration mechanism, for example, to configure the safety zone for mobile robot 201, e.g., as described below.

In some demonstrative aspects, the safety zone configuration mechanism may be configured to provide a technical solution to support a dynamic configuration of the safety zone for mobile robot 201, e.g., as described below.

In some demonstrative aspects, the safety zone configuration mechanism may be configured to provide a technical solution to support a configuration of the safety zone for mobile robot 201, for example, based on one or more attributes of an object, e.g., pedestal 103 (Fig. 1), to be carried by the mobile robot 201, e.g., as described below.

In some demonstrative aspects, the safety zone configuration mechanism may be configured to provide a technical solution to support a configuration of the safety zone for mobile robot 201, for example, based on one or more detected and/or confirmed attributes of the object, e.g., pedestal 103 (Fig. 1), to be carried by the mobile robot 201, e.g., as described below.

In some demonstrative aspects, the safety zone configuration mechanism may be configured to provide a technical solution to support a configuration of the safety zone for mobile robot 201, for example, based on one or more detected and/or confirmed dimensions of the object, e.g., pedestal 103 (Fig. 1), to be carried by the mobile robot 201, e.g., as described below.

In some demonstrative aspects, the safety zone configuration mechanism may be configured to implement on a verification mechanism, e.g., a two-step verification mechanism, which may be configured to verify and/or confirm the type and/or attributes of the object, e.g., pedestal 103 (Fig. 1), to be carried by the mobile robot 201, e.g., as described below.

In some demonstrative aspects, safety sensor 200 may be configured to implement the two-step verification mechanism, for example, to verify and/or confirm the type and/or attributes of the object, e.g., pedestal 103 (Fig. 1), to be carried by the mobile robot 201, for example, based on first pedestal information ("intended object information"), which is to identify the type and/or attributes of an intended object, e.g., pedestal 103 (Fig. 1), to be carried by the mobile robot 201, e.g., as described below.

In some demonstrative aspects, safety sensor 200 may be configured to implement the two-step verification mechanism, for example, to verify and/or confirm the type and/or attributes of the object, e.g., pedestal 103 (Fig. 1), to be carried by the mobile robot 201, for example, based on second pedestal information ("detected object information"), which may be based on an object, e.g., pedestal 103 (Fig. 1), detected by the safety sensor 200, e.g., as described below.

In some demonstrative aspects, safety sensor 200 may be configured to implement the two-step verification mechanism, for example, to verify and/or confirm the type and/or attributes of the object, e.g., pedestal 103 (Fig. 1), to be carried by the mobile robot 201, for example, based on a comparison between the detected object information, which may be based on an object detected by the safety sensor 200, and the intended object information, which is to identify the type and/or attributes of an intended object to be carried by the mobile robot 201, e.g., as described below.

In some demonstrative aspects, safety sensor 200 may be configured to implement the two-step verification mechanism, for example, to determine that the type and/or attributes of the object, e.g., pedestal 103 (Fig. 1), to be carried by the mobile robot 201 are to be verified and/or confirmed, for example, based on a determination that the detected object information, which may be based on an object, e.g., pedestal, detected by the safety sensor 200, matches the intended object information, which is to identify the type and/or attributes of an intended object to be carried by the mobile robot 201, e.g., as described below.

In some demonstrative aspects, safety sensor 200 may be configured to implement the two-step verification mechanism, for example, to determine that the type and/or attributes of the pedestal to be carried by the mobile robot 201 are not to be verified and/or confirmed, for example, based on a determination that the detected pedestal information, which may be based on a pedestal detected by the safety sensor 200, do not match the intended pedestal information, which is to identify the type and/or attributes of an intended pedestal to be carried by the mobile robot 201, e.g., as described below.

In some demonstrative aspects, safety sensor 200 may be configured to implement the safety zone configuration mechanism, for example, to provide a technical solution to support improved maneuver capabilities of the mobile robot 201, for example, by allowing the mobile robot 201 to maneuver in relatively narrow places, e.g., when this is made possible according to the actual size of the object, e.g., pedestal being carried by the mobile robot 201, e.g., as described below.

In some demonstrative aspects, safety sensor 200 may be configured to implement the safety zone configuration mechanism, for example, to provide a technical solution to support higher speeds of the mobile robot 201, for example, in environments where less free space may be available on sides of the mobile robot 201, e.g., as described below.

In some demonstrative aspects, safety sensor 200 may be configured to implement the safety zone configuration mechanism, for example, to provide a technical solution to support improved safety control, for example, with respect to the type of object, e.g., pedestal, actually being carried by the mobile robot 201, e.g., as described below.

In some demonstrative aspects, safety sensor 200 may be configured to identify a type of an object ("intended object"), e.g., a pedestal ("intended pedestal"), to be carried (used) by the mobile robot 201.

In some demonstrative aspects, safety sensor 200 may be configured to identify the type of the intended object, e.g., pedestal, to be carried (used) by the mobile robot 201, for example, based on information received from the system controller 210, and/or from any other component and/or element of mobile robot 201.

In some demonstrative aspects, safety sensor 200 may be configured to search for one or more elements and/or properties of the type of the intended object, e.g., pedestal, to be carried (used) by the mobile robot 201, e.g., as described below.

In some demonstrative aspects, safety sensor 200 may be configured to search for one or more elements and/or properties of the type of the intended object, e.g., pedestal, to be carried (used) by the mobile robot 201, for example, based on sensor information 227 detected by the at least one sensor 204, e.g., as described below.

In some demonstrative aspects, safety sensor 200 may be configured to search for one or more legs of the type of the intended object, e.g., pedestal, to be carried (used) by the mobile robot 201, for example, based on information detected by the at least one sensor 204, e.g., as described below.

In some demonstrative aspects, safety sensor 200 may be configured to determine whether or not the one or more elements and/or properties of the type of the intended object, e.g., pedestal, to be carried (used) by the mobile robot 201 are actually detected, e.g., as described below.

In some demonstrative aspects, safety sensor 200 may be configured to determine whether or not the one or more legs of the type of the intended object, e.g., pedestal, to be carried (used) by the mobile robot 201 are actually detected in a correct location of the mobile robot 201, e.g., as described below.

In some demonstrative aspects, safety sensor 200 may be configured to determine that the type of the intended object, e.g., pedestal, to be carried (used) by the mobile robot 201 has not been detected, for example, based on a determination that the one or more elements and/or properties of the type of intended object, e.g., pedestal, to be carried (used) by the mobile robot 201 are not detected.

For example, safety sensor 200 may be configured to determine that the type of the intended object, e.g., pedestal, to be carried (used) by the mobile robot 201 has not been detected, for example, based on a determination that one or more legs of the type of the intended object, e.g., pedestal, to be carried (used) by the mobile robot 201 are not detected in a predefined location corresponding to the type of the intended object, e.g., pedestal, to be carried (used) by the mobile robot 201.

In some demonstrative aspects, safety sensor 200 may be configured to provide an indication (error indication), e.g., to the system controller 210, for example, based on a determination that the one or more elements and/or properties of the type of intended object, e.g., pedestal, to be carried (used) by the mobile robot 201 are not detected.

In some demonstrative aspects, the indication (error indication) may be configured to indicate, e.g., identify, represent, configure, and/or define, for example, that there is a problem with the assumed object, e.g., pedestal, for example, that the assumed object, e.g., pedestal, is not in place, that the assumed object, e.g., pedestal is not there, or that an object having a different size that the assumed object, e.g., pedestal, is actually carried by, e.g., mounted on, the mobile robot 201.

In some demonstrative aspects, safety sensor 200 may be configured to determine that the type of the intended object, e.g., pedestal, to be carried (used) by the mobile robot 201 has successfully been detected, for example, based on a determination that the one or more elements and/or properties of the type of intended object, e.g., pedestal, to be carried (used) by the mobile robot 201 have been successfully detected.

For example, safety sensor 200 may be configured to determine that the type of the intended object, e.g., pedestal, to be carried (used) by the mobile robot 201 has been successfully detected, for example, based on a determination that one or more legs of the type of the intended object, e.g., pedestal, to be carried (used) by the mobile robot 201 are detected in the predefined location corresponding to the type of the intended object, e.g., pedestal, to be carried (used) by the mobile robot 201.

In some demonstrative aspects, safety sensor 200 may be configured to provide an indication (confirmation indication), e.g., to the system controller 210, for example, based on a determination that the one or more elements and/or properties of the type of the intended object, e.g., pedestal, to be carried (used) by the mobile robot 201 have been successfully detected.

In some demonstrative aspects, safety sensor 200 may be configured to utilize characteristics information, e.g., predefined characteristics information, corresponding to the type of the intended object, e.g., pedestal, to be carried (used) by the mobile robot 201, for example, in order to detect and validate the type of the intended object, e.g., pedestal, to be carried (used) by the mobile robot 201.

For example, the characteristics information may include predefined information corresponding to one or more known and/or predefined object types, for example, pedestal types, e.g., standard pedestal types.

In one example, the predefined characteristics information may include, for example, predefined leg information to identify predefined locations, shapes, colors, and/or other additional or alternative leg-related attributes, for example, corresponding to one or more known and/or predefined pedestal types, e.g., standard pedestal types.

For example, safety sensor 200 may be configured to automatically detect and/or validate the leg locations of the intended object, e.g., pedestal, to be carried by the mobile robot 201, for example, based on leg information corresponding to a standard object type, e.g., a standard pedestal type, intended to be carried by the mobile robot 201.

In other aspects, safety sensor 200 may be configured to utilize any other additional or alternative suitable information, for example, in order to detect and validate the type of the intended object, e.g., pedestal, to be carried (used) by the mobile robot 201.

For example, characteristics information, e.g., including leg attribute information, corresponding to one or more types of pedestals may be provided to safety sensor 200, e.g., in a manual manner, for example, in case of non-standard pedestal types.

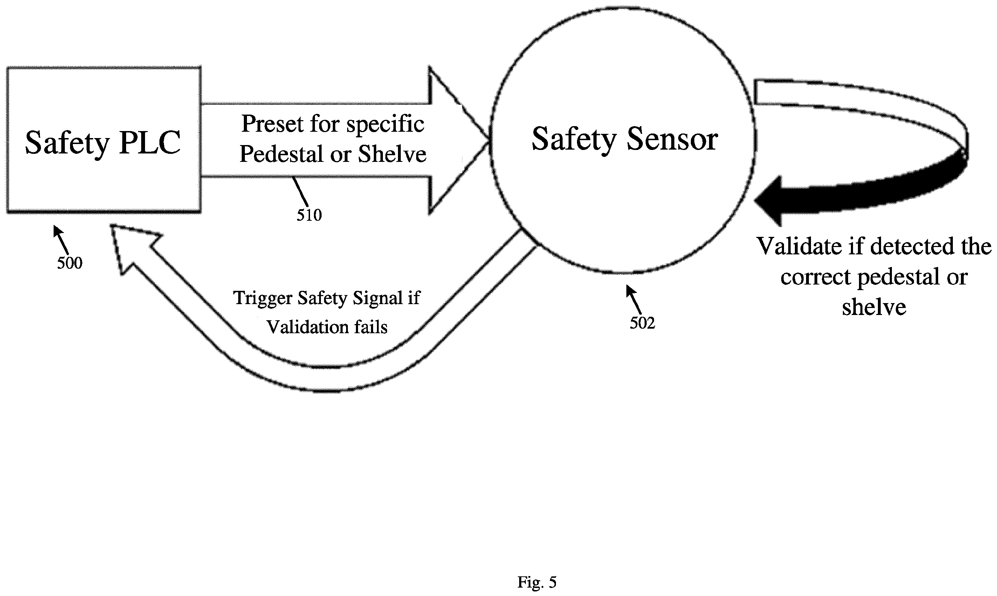

Reference is made to Fig.5, which schematically illustrates operations and communications performed by a controller 500 and a safety sensor 502 of a mobile robot, in accordance with some demonstrative aspects.

For example, safety sensor 200 (Fig. 2) may be configured to perform one or more operations and/or functionalities of safety sensor 502.

In some demonstrative aspects, as shown in Fig. 5, safety sensor 502 may be configured to receive safety preset information 510, for example, from the controller 500.

For example, as shown in Fig. 5, the controller 500 may include a safety Programable Logic Controller (PLC), a safety Micro Control Unit (MCU), or the like.

For example, system controller 210 (Fig. 2) may be configured to perform one or more operations and/or functionalities of the controller 500.

For example, object information 291 (Fig. 2) may include the safety preset information 510.

For example, the safety preset information 510 may include information, e.g., an indication and/or an identification, of a type of an intended object, e.g., an intended pedestal, to be carried by the mobile robot.

For example, the safety preset information 510 may include information to indicate, e.g., identify, represent, configure, and/or define, one or more attributes of the intended object to be carried by the mobile robot.

For example, the safety preset information 510 may include object characteristics information, e.g., pedestal characteristics information, corresponding to the intended object, e.g., pedestal, to be carried by the mobile robot.

For example, the safety preset information 510 may include leg characteristics information corresponding to one or more characteristics of one or more legs of the intended object, e.g., pedestal, to be carried by the mobile robot.

In one example, the safety preset information 510 may include leg location information to indicate, e.g., identify, represent, configure, and/or define, leg locations of the legs of the intended object, e.g., pedestal, to be carried by the mobile robot.

In one example, the safety preset information 510 may include leg attribute information to indicate, e.g., identify, represent, configure, and/or define, leg attributes of the legs of the intended object, e.g., pedestal, to be carried by the mobile robot. For example, the leg attribute information may be configured to indicate, e.g., identify, represent, configure, and/or define, a leg width, a leg height, a leg shape, a leg color, and/or any other additional or alternative information relating to one or more attributes or characteristics of the legs of the intended object, e.g., pedestal, to be carried by the mobile robot.

For example, the safety preset information 510 may include information, e.g., an indication and/or an identification, of a safety zone to be configured based on the type of the intended object, e.g., pedestal, to be carried by the mobile robot.

In some demonstrative aspects, safety sensor 502 may be configured to search for one or more elements and/or properties of the intended object, e.g., pedestal, to be carried by the mobile robot, for example, as may be identified based on the safety preset information 510 from the controller 500.

In some demonstrative aspects, safety sensor 502 may be configured to search for one or more elements and/or properties of the intended object, e.g., pedestal, to be carried by the mobile robot, for example, based on information detected by the safety sensor of the mobile robot, e.g., the sensor 204 (Fig. 2).

For example, safety sensor 502 may be configured to search for one or more legs of the intended pedestal to be carried by the mobile robot, for example, based on the leg characteristics information, which may be determined and/or identified, for example, based on the safety preset information provided by the controller 500.

In some demonstrative aspects, as shown in Fig. 5, the safety sensor 502 may be configured to verify and/or confirm whether or not the intended object, e.g., pedestal, to be carried by the mobile robot has been detected, for example, based on the sensor information 227 (Fig. 2), e.g., as described below.

In some demonstrative aspects, as shown in Fig. 5, the safety sensor 502 may be configured to verify and/or confirm whether or not the intended object, e.g., pedestal, to be carried by the mobile robot has been detected, for example, based on a determination whether or not the one or more elements and/or properties of the intended object, e.g., pedestal, to be carried by the mobile robot have been detected, e.g., as described below.

In some demonstrative aspects, as shown in Fig. 5, the safety sensor 502 may be configured to verify and/or confirm whether or not the intended object, e.g., pedestal, to be carried by the mobile robot has been detected, for example, based on a determination whether or not one or more legs of the intended object, e.g., pedestal, to be carried by the mobile robot have been detected.

In some demonstrative aspects, as shown in Fig. 5, the safety sensor 502 may be configured to verify and/or confirm whether or not the intended pedestal to be carried by the mobile robot has been detected, for example, based on a determination whether or not a location of a detected leg matches a leg location according to the safety preset information provided by the controller 500, and/or based on a determination whether or not one or more attributes of the detected leg match one or more leg attributes according to the safety preset information 510 provided by the controller 500.

In some demonstrative aspects, as shown in Fig. 5, the safety sensor 502 may be configured to determine that the intended pedestal to be carried by the mobile robot has been verified, for example, based on a determination that a location of the detected leg matches the leg location according to the safety preset information provided by the controller 500, and/or based on a determination that the one or more attributes of the detected leg match the one or more leg attributes according to the safety preset information provided by the controller 500.

For example, the safety sensor 502 may be configured to determine that the intended object, e.g., pedestal, to be carried by the mobile robot has been verified, for example, based on a determination that the searched leg of the intended object, e.g., pedestal, is detected in a location matching the leg location of the intended object, e.g., pedestal, for example, with any suitable, e.g., pre-configured, tolerances.

In some demonstrative aspects, as shown in Fig. 5, the safety sensor 502 may be configured to provide a validation acknowledgement signal (OK) to the controller 500, for example, based on the determination that the intended object, e.g., pedestal, has been verified.

In some demonstrative aspects, as shown in Fig. 5, the safety sensor 502 may be configured to provide a validation failure signal (safety signal) to the controller 500, for example, based on the determination that the intended object, e.g., pedestal, has not been successfully verified.

In some demonstrative aspects, the safety sensor 502 may be configured to configure a safety zone for the mobile robot, for example, based on the verification of the intended object, e.g., pedestal, to be carried by the mobile robot, e.g., as described below.

For example, the safety sensor 502 may be configured to set a boundary around the mobile robot, for example, based on a detection of a correct pedestal size of the pedestal to be carried by the mobile robot.

For example, the setting of the boundary around the mobile robot based on the detection of the correct pedestal size of the pedestal to be carried by the mobile robot may provide a technical solution to set a relatively accurate (correct) boundary around the mobile robot.

For example, the ability to set the relatively accurate (correct) boundary around the mobile robot may provide a technical solution to support better maneuverability of the mobile robot.

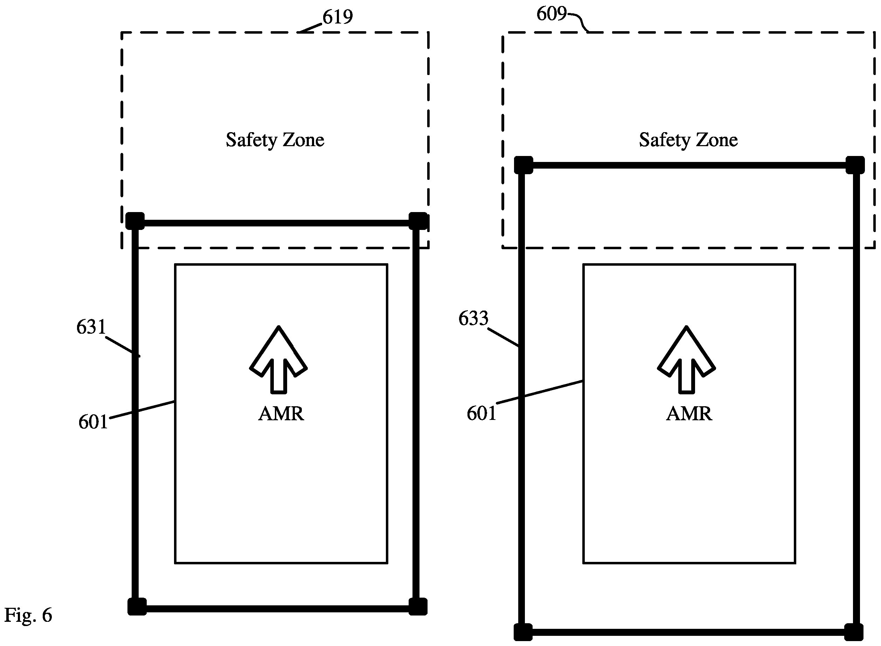

Reference is made to Fig. 6, which schematically illustrates a configurable safety-zone, in accordance with some demonstrative aspects.

For example, as shown in Fig. 6, a safety sensor of a mobile robot 601, e.g., the safety sensor 502 (Fig. 5), may be configured to detect and verify an actual pedestal size of the pedestal to be carried by the mobile robot 601.

For example, as shown in Fig. 6, the safety sensor of the mobile robot 601, e.g., the safety sensor 502 (Fig. 5), may be configured to differentiate between a first pedestal 631 having a first pedestal size, and a second pedestal 633 having a second pedestal size. For example, as shown in Fig. 6, the dimensions of the first pedestal 631 may be smaller than then dimensions of the second pedestal 633.

For example, as shown in Fig. 6, the safety sensor of the mobile robot 601, e.g., the safety sensor 502 (Fig. 5), may be configured to determine a safety zone configuration for the mobile robot 601, for example, based on the verified actual pedestal size of the pedestal to be carried by the mobile robot 601.

For example, as shown in Fig. 6, the safety sensor of the mobile robot 601, e.g., the safety sensor 502 (Fig. 5), may be configured to determine the safety zone configuration for the mobile robot 601, for example, such that a size of the safety zone may match the size of the actual pedestal to be carried by the mobile robot 601.

For example, as shown in Fig. 6, the safety sensor of the mobile robot 601, e.g., the safety sensor 502 (Fig. 5), may be configured to determine a first safety zone configuration 619 for the mobile robot 601, for example, based on the first verified actual pedestal size of the first pedestal 631.

For example, as shown in Fig. 6, the safety sensor of the mobile robot 601, e.g., the safety sensor 502 (Fig. 5), may be configured to determine a second safety zone configuration 609 for the mobile robot 601, for example, based on the second verified actual pedestal size of the second pedestal 633.

For example, as shown in Fig. 6, the safety sensor of the mobile robot 601, e.g., the safety sensor 502 (Fig. 5), may be configured to determine the first safety zone 619 to be utilized for the first pedestal size 631, for example, to be narrower than the second safety zone 609 to be utilized for the second pedestal size 633.

For example, the safety sensor of the mobile robot 601, e.g., the safety sensor 502 (Fig. 5), may be configured to utilize the first safety zone 619 for the first pedestal size 631, for example, to provide a technical solution to support improved maneuverability of the mobile robot 601, e.g., when carrying the first pedestal 631.

For example, the safety sensor of the mobile robot 601, e.g., the safety sensor 502 (Fig. 5), may be configured to utilize the first safety zone 619 for the first pedestal size 631, for example, to provide a technical solution to allow the mobile robot 601 to move with an increased speed, for example, when carrying the first pedestal 631.

For example, the safety sensor of the mobile robot 601, e.g., the safety sensor 502 (Fig. 5), may be configured to utilize the first safety zone 619 for the first pedestal size 631, for example, to provide a technical solution to allow the mobile robot 601 to move in relatively narrow passages, for example, when carrying the first pedestal 631.

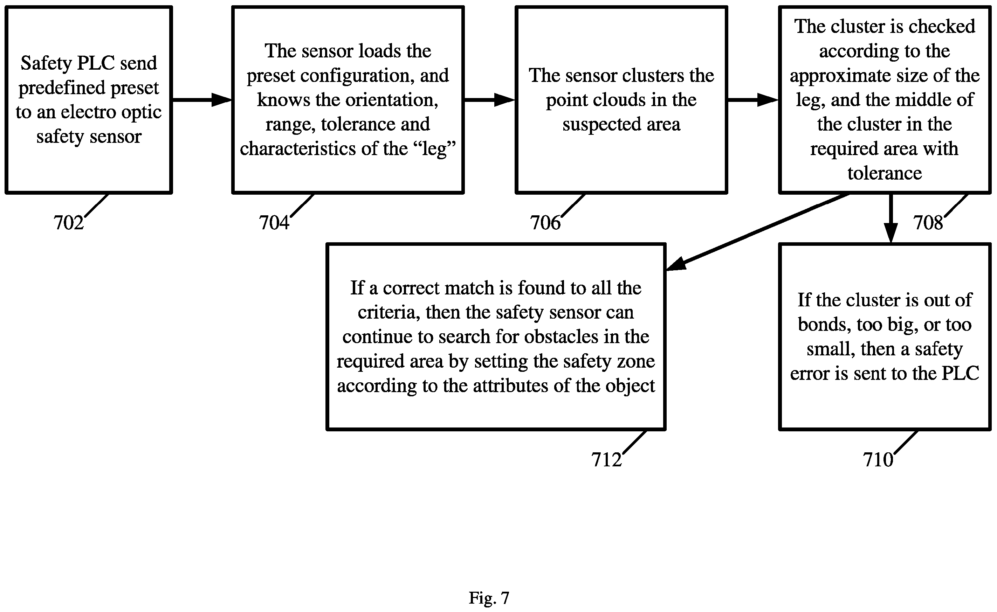

Reference is made to Fig. 7, which schematically illustrates a method of verifying attributes of an object to be carried by a mobile robot, in accordance with some demonstrative aspects. For example, one or more of the operations of the method of Fig. 7 may be performed by one or more elements of a mobile robot, e.g., mobile robot 201 (Fig. 2), for example, a safety sensor, e.g., safety sensor 200 (Fig. 2) and/or safety sensor 502 (Fig. 5), a processor, e.g., processor 209 (Fig. 2), a controller, e.g., controller 210 (Fig. 2) and/or controller 500 (Fig. 5), and/or a sensor, e.g., sensor 204 (Fig. 2).

For example, one or more operations of the method of Fig 7 may be implemented by a safety sensor of a mobile robot, e.g., safety sensor 200 (Fig. 2) and/or safety sensor 502 (Fig. 5), for example, to verify detection of an intended object, e.g., a pedestal, to be carried by the mobile robot.

In one example, one or more of the operations of the method of Fig. 7 may be implemented with respect to sensor information provided by an image-based safety sensor, for example, an electro-optic safety sensor, e.g., a safety sensor utilizing a 3D camera.

In another example, one or more of the operations of the method of Fig. 7 may be implemented with respect to sensor information provided by a light-based safety sensor, e.g., a safety sensor utilizing a LiDAR sensor, for example, a 2D LiDAR sensor or a 3D LiDAR sensor.

In another example, one or more of the operations of the method of Fig. 7 may be implemented with respect to sensor information provided by a radar-based safety sensor, e.g., a safety sensor utilizing at least one radar sensor.

In some demonstrative aspects, a safety sensor, for example, an electro optical safety sensor utilizing an electro-optical sensor, and/or any other type of safety sensor, e.g., safety sensor 200 (Fig. 2) and/or safety sensor 502 (Fig. 5), may be configured to perform one or more operations of the method of Fig. 7, for example, to decide if a part, e.g., a leg and/or any other suitable part, of an object, e.g., a pedestal, is detected.

In some demonstrative aspects, the safety sensor, e.g., safety sensor 200 (Fig. 2) and/or safety sensor 502 (Fig. 5), may be configured to perform one or more operations of the method of Fig. 7, for example, to configure a safety zone, for example, based on a determination that the object, e.g., the pedestal, is detected.

In some demonstrative aspects, as indicated at block 702, the method may include providing object information to the safety sensor, for example, from a controller of the mobile robot, e.g., a safety PLC, or any other suitable controller.

For example, as indicated at block 702, the controller 210 (Fig. 2) of the mobile robot 201 (Fig. 2) may provide the object information 291 (Fig. 2) to the processor 209 (Fig. 2) of the safety sensor 200 (Fig. 2), e.g., as described above.

For example, as indicated at block 702, the object information may include predefined preset object configuration information corresponding to the intended object to be carried by the mobile robot, e.g., as described above.

In some demonstrative aspects, as indicated at block 704, the method may include processing the object information at the safety sensor, for example, to identify one or more attributes of the intended object to be carried by the mobile robot.

For example, as indicated at block 704, the safety sensor may load the preset object configuration information, for example, to determine the orientation, range, tolerance, and/or one or more other characteristics of a "leg" of the object to be carried by the mobile robot.

For example, the processor 209 (Fig. 2) of the safety sensor 200 (Fig. 2) may process the object information 291 (Fig. 2) to identify the one or more attributes of the intended object to be carried by the mobile robot 201 (Fig. 2), e.g., as described above.

In some demonstrative aspects, the safety sensor, e.g., safety sensor 200 (Fig. 2) and/or safety sensor 502 (Fig. 5), may be configured to detect a part of an object and to decide if the detected part of the object, e.g., the leg, is in a correct place, e.g., an expected location per the intended type of the object.

In some demonstrative aspects, as indicated at block 706, the method may include processing sensor information from at least one sensor of the mobile robot to detect an object, for example, based on the one or more attributes of the intended object to be carried by the mobile robot.

For example, as indicated at block 706, the safety sensor may process point cloud information from the image-based sensor to identify a cluster corresponding to an area expected to include the intended object to be carried by the mobile robot.

For example, the processor 209 (Fig. 2) of the safety sensor 200 (Fig. 2) may process the sensor information 227 (Fig. 2) to identify sensor information, e.g., image information, corresponding to the area expected to include the intended object to be carried by the mobile robot 201 (Fig. 2), e.g., as described above.

In some demonstrative aspects, the safety sensor, e.g., safety sensor 200 (Fig. 2) and/or safety sensor 502 (Fig. 5), may be configured to determine whether there is a match between the leg characteristics, e.g., as described in the preset object configuration information, and the cluster information corresponding to the "leg" that is sensed by the safety sensor.

In some demonstrative aspects, as indicated at block 708, the method may include determining whether the intended object is detected, for example, based on the sensor information from the at least one sensor of the mobile robot.

For example, as indicated at block 708, the safety sensor may check the identified cluster, for example, according to the approximate size of the leg, and/or the middle of the cluster in the required area, e.g., with a tolerance.

For example, the processor 209 (Fig. 2) of the safety sensor 200 (Fig. 2) may determine whether the intended object is detected, for example, based on the sensor information 227 (Fig. 2) and the one or more attributes of the intended object according to the object information 291 (Fig. 2), e.g., as described above.

In some demonstrative aspects, as indicated at block 710, the method may include providing a detection error indication to the controller of the mobile robot, for example, based on a determination that the intended object is not detected.

For example, as indicated at block 710, the safety sensor may send a safety error to the safety PLC, for example, based on a determination that the cluster is out of bonds, is too big, or is too small, e.g., according to the characteristics described in the preset object configuration information.

For example, the processor 209 (Fig. 2) of the safety sensor 200 (Fig. 2) may send the detection result indication 293 (Fig. 2) including the detection error indication to the controller 210 (Fig. 2), for example, to indicate, e.g., identify, represent, configure, and/or define, that the intended object is not detected based on the sensor information 227 (Fig. 2), e.g., as described above.

In some demonstrative aspects, as indicated at block 712, the method may include providing a detection confirmation indication to the controller of the mobile robot, for example, based on the determination that the intended object is detected.

For example, the safety sensor may send a safety confirmation to the safety PLC, for example, based on a determination that a correct match is found with respect to all required criteria, e.g., according to the characteristics described in the preset object configuration information.

For example, the processor 209 (Fig. 2) of the safety sensor 200 (Fig. 2) may send the detection result indication 293 (Fig. 2) including the detection confirmation indication to the controller 210 (Fig. 2), for example, to indicate, e.g., identify, represent, configure, and/or define, that the intended object is detected based on the sensor information 227 (Fig. 2), e.g., as described above.

In some demonstrative aspects, as indicated at block 712, the method may include configuring a safety zone for the mobile robot based on one or more attributes of the intended object, for example, based on a determination that the intended object is detected.

For example, the processor 209 (Fig. 2) of the safety sensor 200 (Fig. 2) may configure a safety zone for the mobile robot 201 (Fig. 2), for example, based on one or more attributes of the intended object, for example, based on the determination that the intended object is detected based on the sensor information 227 (Fig. 2), e.g., as described above.

In some demonstrative aspects, as indicated at block 712, the method may include monitoring the sensor information to detect a hazard in the safety zone during movement of the mobile robot.

For example, the processor 209 (Fig. 2) of the safety sensor 200 (Fig. 2) may monitor the sensor information 227 (Fig. 2) to detect a hazard in the safety zone, e.g., which is defined according to the one or more attributes of the verified object, for example, during movement of the mobile robot 201 (Fig. 2), e.g., as described above.

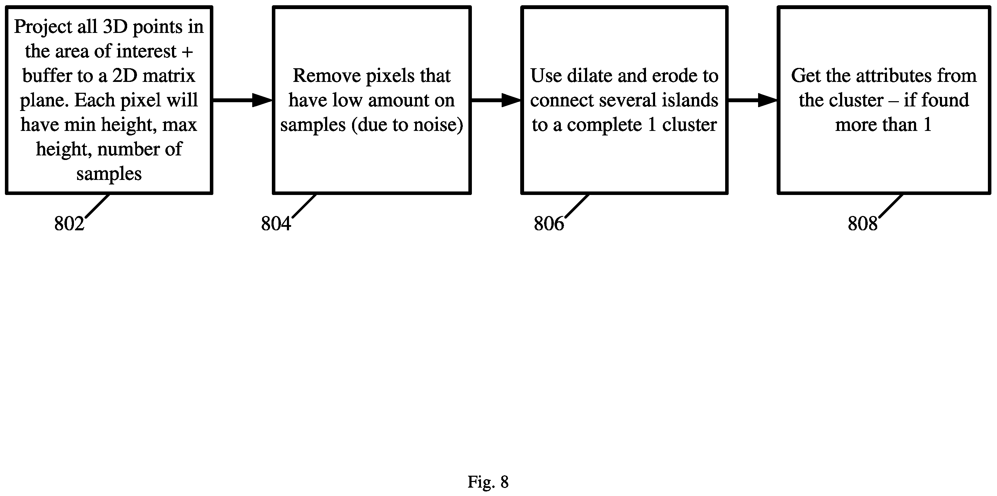

Reference is made to Fig. 8, which schematically illustrates a method of detecting attributes of an object to be carried by a mobile robot, in accordance with some demonstrative aspects. For example, one or more of the operations of the method of Fig. 8 may be performed by one or more elements of a mobile robot, e.g., mobile robot 201 (Fig. 2), for example, a safety sensor, e.g., safety sensor 200 (Fig. 2) and/or safety sensor 502 (Fig. 5), a processor, e.g., processor 209 (Fig. 2), a controller, e.g., controller 210 (Fig. 2) and/or controller 500 (Fig. 5), and/or a sensor, e.g., sensor 204 (Fig. 2).

For example, one or more operations of the method of Fig 8 may be implemented by a safety sensor of a mobile robot, e.g., safety sensor 200 (Fig. 2) and/or safety sensor 502 (Fig. 5), for example, to detect one or more attributes of an object, e.g., a pedestal, for example, based on sensor information from a sensor of the mobile robot, e.g., the sensor information 227 (Fig. 2).

In one example, one or more of the operations of the method of Fig. 8 may be implemented with respect to sensor information provided by an image-based safety sensor, for example, an electro-optic safety sensor, e.g., a safety sensor utilizing a 3D camera.

In another example, one or more of the operations of the method of Fig. 8 may be implemented with respect to sensor information provided by a light-based safety sensor, e.g., a safety sensor utilizing a LiDAR sensor, for example, a 2D LiDAR sensor or a 3D LiDAR sensor.

In another example, one or more of the operations of the method of Fig. 8 may be implemented with respect to sensor information provided by a radar-based safety sensor, e.g., a safety sensor utilizing at least one radar sensor.

In some demonstrative aspects, a safety sensor, for example, an electro optical safety sensor utilizing an electro-optical sensor, and/or any other type of safety sensor, e.g., safety sensor 200 (Fig. 2) and/or safety sensor 502 (Fig. 5), may be configured to perform one or more operations of the method of Fig. 8, for example, to detect one or more attributes of a part, e.g., a leg and/or any other suitable part, of an object, e.g., a pedestal.

In some demonstrative aspects, as indicated at block 802, the method may include processing the sensor information, for example, to project three-dimensional (3D) points to a two-dimensional (2D) plane.

For example, the processor 209 (Fig. 2) of the safety sensor 200 (Fig. 2) may process the sensor information 227 (Fig. 2), for example, to project 3D points to a 2D plane, for example, according to any suitable image-processing mechanism.

In some demonstrative aspects, as indicated at block 804, the method may include removing from the 2D information noise pixels.

In some demonstrative aspects, as indicated at block 806, the method may include configuring a cluster of points, for example, by lustering one or more groups of points in the 2D plane.

In some demonstrative aspects, as indicated at block 808, the method may include detecting one or more attributes of the intended object, e.g., attributes of a leg of a pedestal, for example, based on the clustered points.

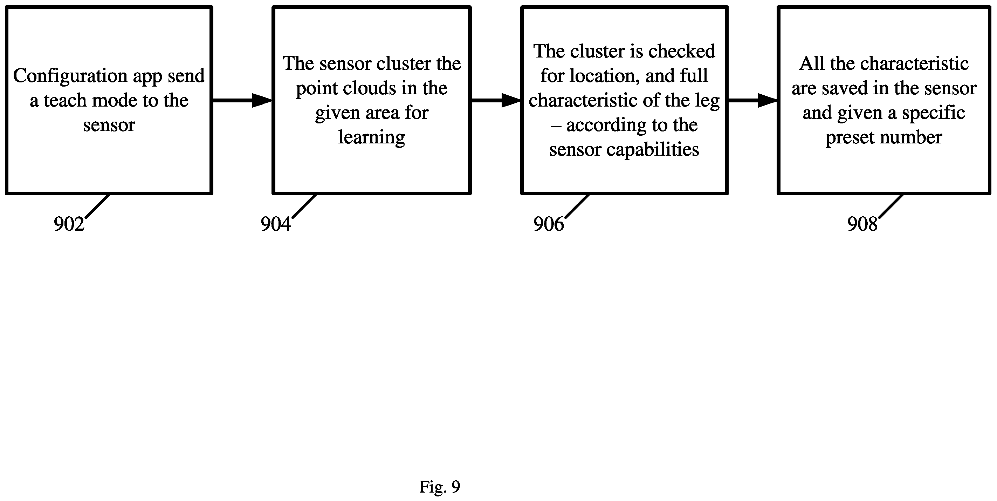

Reference is made to Fig. 9, which schematically illustrates a method of training an object attribute detector, in accordance with some demonstrative aspects. For example, one or more of the operations of the method of Fig. 9 may be performed by one or more elements of a mobile robot, e.g., mobile robot 201 (Fig. 2), for example, a safety sensor, e.g., safety sensor 200 (Fig. 2) and/or safety sensor 502 (Fig. 5), a processor, e.g., processor 209 (Fig. 2), a controller, e.g., controller 210 (Fig. 2) and/or controller 500 (Fig. 5), and/or a sensor, e.g., sensor 204 (Fig. 2).

For example, one or more operations of the method of Fig 9 may be implemented by a safety sensor of a mobile robot, e.g., safety sensor 200 (Fig. 2) and/or safety sensor 502 (Fig. 5), for example, to train the safety sensor to detect one or more attributes of an intended object.

In some demonstrative aspects, a safety sensor, for example, an electro optical safety sensor utilizing an electro-optical sensor, and/or any other type of safety sensor, e.g., safety sensor 200 (Fig. 2) and/or safety sensor 502 (Fig. 5), may be configured to perform one or more operations of the method of Fig. 9, for example, at a "teach mode", for example, to learn, e.g., to automatically learn, characteristics of an object, for example, a pedestal, e.g., a leg of a pedestal.

For example, the "teach mode" may be implemented, for example, as part of a configuration phase of the safety sensor.

For example, the safety sensor may operate at the "teach" mode, for example, to detect the legs around the mobile robot, and to store detection information corresponding to the detected legs, for example, under a desired preset, e.g., a preset identifier.

In some demonstrative aspects, the detection itself may change according to the type and/or capabilities of the safety sensor.

For example, a specific cluster of points where the surroundings are empty may be considered as a "leg", e.g., for a 2D LiDAR.

In one example, a maximum leg size may be taken into consideration as part of the detection.

In some demonstrative aspects, as indicated at block 902, the method may include setting the safety sensor at the "teach" mode. For example, during the "teach" mode a predefined scenario, e.g., including a predefined object having one or more predefined attributes, may be presented to the safety sensor.

In some demonstrative aspects, as indicated at block 904, the method may include processing sensor information corresponding to the predefined scenario at the safety sensor. For example, processor 209 (Fig. 2), may be configured to process the sensor information 227 (Fig. 2), which may be captured by the sensor 204 (Fig. 2) based on the predefined scenario.

For example, as indicated at block 904, the safety sensor may cluster point clouds based on the sensor information corresponding to the predefined scenario for the "teach" mode.

In some demonstrative aspects, as indicated at block 904, the method may include identifying information ("attribute detection information"), which may be used to identify the predefined object, for example, based on the sensor information corresponding to the predefined scenario.

For example, processor 209 (Fig. 2), may be configured to process the sensor information 227 (Fig. 2), which may be captured by the sensor 204 (Fig. 2) based on the predefined scenario, for example, to identify attribute detection information, which may be used to identify the predefined object. For example, the attribute detection information may include information, which may correspond to one or more attributes of the object, e.g., one or more attributes of a leg of a particular pedestal, or the like.

For example, as indicated at block 906, the safety sensor may process the cluster information to identify information, which may be used to detect a location and/or one or more characteristics of the leg of the pedestal.

In some demonstrative aspects, as indicated at block 908, the method may include storing the attribute detection information corresponding to the predefined object in the predefined scenario.

For example, processor 209 (Fig. 2), may be configured to store the attribute detection information corresponding to the predefined object, e.g., the leg of the pedestal.

For example, as indicated at block 908, the safety sensor may store the determined characteristics to detect the predefined object, for example, in association with a predefined identifier, e.g., for future identification of the predefined object.

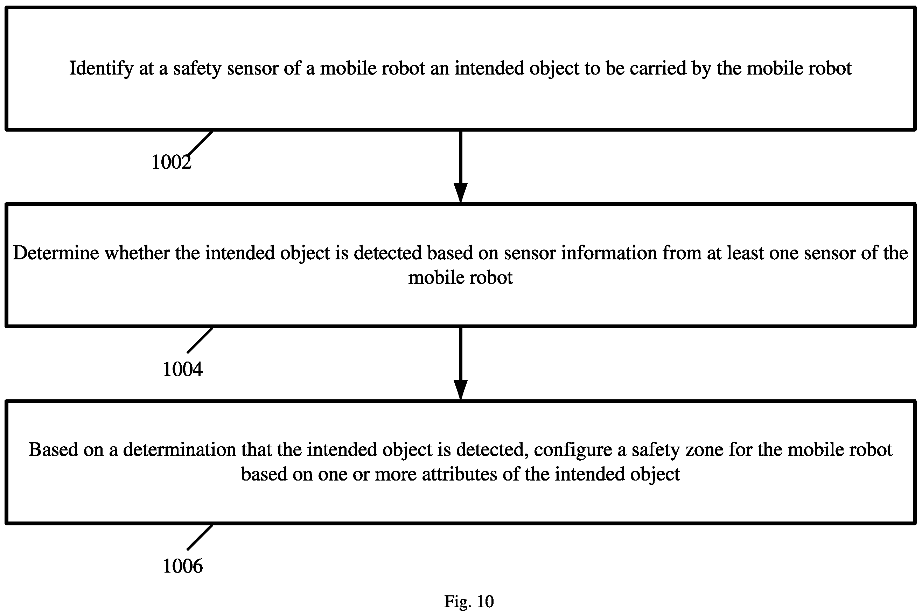

Reference is made to Fig. 10, which schematically illustrates a method of configuring a safety zone for a mobile robot, in accordance with some demonstrative aspects. For example, one or more of the operations of the method of Fig. 10 may be performed by one or more elements of a mobile robot, e.g., mobile robot 201 (Fig. 2), for example, a safety sensor, e.g., safety sensor 200 (Fig. 2) and/or safety sensor 502 (Fig. 5), a processor, e.g., processor 209 (Fig. 2), a controller, e.g., controller 210 (Fig. 2) and/or controller 500 (Fig. 5), and/or a sensor, e.g., sensor 204 (Fig. 2).

In some demonstrative aspects, as indicated at block 1002, the method may include identifying at a safety sensor of a mobile robot an intended object to be carried by the mobile robot. For example, processor 209 (Fig. 2) may be configured to identify an intended object, e.g., an intended pedestal 103 (Fig. 1) to be carried by the mobile robot 201 (Fig. 2), e.g., as described above.

In some demonstrative aspects, as indicated at block 1004, the method may include determining whether the intended object is detected based, for example, on sensor information from at least one sensor of the mobile robot. For example, processor 209 (Fig. 2) may be configured to determine whether the intended object, e.g., the intended pedestal 103 (Fig. 1), is detected based, for example, on sensor information 227 (Fig. 2) from at least one sensor 204 (Fig. 2) of the mobile robot 201 (Fig. 2), e.g., as described above.

In some demonstrative aspects, as indicated at block 1006, the method may include configuring a safety zone for the mobile robot based on one or more attributes of the intended object, for example, based on a determination that the intended object is detected, e.g., based on the sensor information. For example, processor 209 (Fig. 2) may configure a safety zone for the mobile robot 201 (Fig. 1), for example, based on one or more attributes of the intended object, e.g., the intended pedestal 103 (Fig. 1), for example, based on a determination that the intended object is detected based on the sensor information 227 (Fig. 2), e.g., as described above.

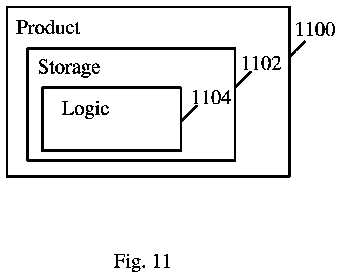

Reference is made to Fig. 11, which schematically illustrates a product of manufacture 1100, in accordance with some demonstrative aspects. Product 1100 may include one or more tangible computer-readable ("machine-readable") non-transitory storage media 1102, which may include computer-executable instructions, e.g., implemented by logic 1104, operable to, when executed by at least one processor, enable the at least one processor to implement one or more operations at a mobile robot, e.g., mobile robot 201 (Fig. 2), a safety sensor, e.g., safety sensor 200 (Fig. 2) and/or safety sensor 502 (Fig. 5), a processor, e.g., processor 209 (Fig. 2), a controller, e.g., controller 210 (Fig. 2) and/or controller 500 (Fig. 5), and/or a sensor, e.g., sensor 204 (Fig. 2); to cause a mobile robot, e.g., mobile robot 201 (Fig. 2), a safety sensor, e.g., safety sensor 200 (Fig. 2) and/or safety sensor 502 (Fig. 5), a processor, e.g., processor 209 (Fig. 2), a controller, e.g., controller 210 (Fig. 2) and/or controller 500 (Fig. 5), and/or a sensor, e.g., sensor 204 (Fig. 2) to perform, trigger and/or implement one or more operations and/or functionalities; and/or to perform, trigger and/or implement one or more operations and/or functionalities described with reference to the Figs. 1-10, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1100 and/or machine readable storage media 1102 may include one or more types of computer-readable storage media capable of storing data, including volatile memory, non-volatile memory, removable or non-removable memory, erasable or non-erasable memory, writeable or re-writeable memory, and the like. For example, machine readable storage media 1102 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1104 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1104 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus for a mobile robot, the apparatus comprising a processor configured to identify an intended object to be carried by the mobile robot; determine whether the intended object is detected based on sensor information from at least one sensor of the mobile robot; and based on a determination that the intended object is detected, configure a safety zone for the mobile robot based on one or more attributes of the intended object; and a memory to store information processed by the processor.

Example 2 includes the subject matter of Example 1, and optionally, wherein the processor is configured to identify the intended object based on object information from a controller of the mobile robot.

Example 3 includes the subject matter of Example 2, and optionally, wherein the object information from the controller of the mobile robot comprises detection criterion information to indicate, e.g., identify, represent, configure, and/or define, at least one criterion to detect the intended object, wherein the processor is configured to determine whether the intended object is detected based on whether the at least one criterion is met with respect to the sensor information.

Example 4 includes the subject matter of Example 2 or 3, and optionally, wherein the processor is configured to provide a detection confirmation information (indication) to the controller of the mobile robot based on the determination that the intended object is detected.

Example 5 includes the subject matter of any one of Examples 2-4, and optionally, wherein the processor is configured to provide a detection error information (indication) to the controller of the mobile robot based on a determination that the intended object is not detected.

Example 6 includes the subject matter of any one of Examples 1-5, and optionally, wherein the processor is configured to process the sensor information to detect one or more predefined object-identification attributes of the intended object, and to determine that the intended object is detected based on a determination that the one or more predefined object-identification attributes are detected.

Example 7 includes the subject matter of Example 6, and optionally, wherein the one or more predefined object-identification attributes comprises one or more leg attributes of one or more legs of the intended object.

Example 8 includes the subject matter of Example 7, and optionally, wherein the one or more leg attributes comprises at least one of a leg dimension, a leg location, a leg shape, or a leg color.

Example 9 includes the subject matter of any one of Examples 6-8, and optionally, wherein the one or more predefined object-identification attributes comprises one or more boundary attributes of one or more boundaries of the intended object.

Example 10 includes the subject matter of any one of Examples 6-9, and optionally, wherein the processor is configured to identify the one or more predefined object-identification attributes based on object information from a controller of the mobile robot.

Example 11 includes the subject matter of any one of Examples 1-10, and optionally, wherein the processor is configured to configure the safety zone based on safety zone information from a controller of the mobile robot, the safety zone information corresponding to the intended object.

Example 12 includes the subject matter of any one of Examples 1-11, and optionally, wherein the processor is configured to configure the safety zone for the mobile robot based on safety requirements corresponding to the one or more attributes of the intended object.

Example 13 includes the subject matter of any one of Examples 1-12, and optionally, wherein the processor is configured to determine a first safety zone for the mobile robot based on one or more first attributes of a first intended object, based on a determination that the first intended object is detected based on first sensor information; and determine a second safety zone for the mobile robot based on one or more second attributes of a second intended object, based on a determination that the second intended object is detected based on second sensor information, wherein the second safety zone is different from the first safety zone, the second intended object is different from the first intended object.

Example 14 includes the subject matter of any one of Examples 1-13, and optionally, wherein the processor is configured to configure one or more dimensions of the safety zone based on the one or more attributes of the intended object.

Example 15 includes the subject matter of any one of Examples 1-14, and optionally, wherein the processor is configured to configure one or more dimensions of the safety zone based on one or more dimensions of the intended object.

Example 16 includes the subject matter of any one of Examples 1-15, and optionally, wherein the processor is configured to configure a shape the safety zone based on a shape of the intended object.

Example 17 includes the subject matter of any one of Examples 1-16, and optionally, wherein the one or more attributes of the intended object comprises at least one of a dimension of the intended object, a size of the intended object, a shape of the intended object, or a type of the intended object.

Example 18 includes the subject matter of any one of Examples 1-17, and optionally, wherein the processor is configured to monitor the sensor information to detect a hazard in the safety zone during movement of the mobile robot; and generate an alert based on a determination that the hazard is detected in the safety zone.

Example 19 includes the subject matter of any one of Examples 1-18, and optionally, wherein the intended object comprises a pedestal or a shelf.

Example 20 includes the subject matter of any one of Examples 1-19, and optionally, comprising a safety sensor for the mobile robot, the safety sensor comprising the processor, the memory, and the at least one sensor.

Example 21 includes the subject matter of Example 20, and optionally, comprising a controller of the mobile robot to control one or more operations of the mobile robot based on safety information from the safety sensor.

Example 22 comprises an apparatus comprising means for executing any of the described operations of Examples 1-21.

Example 23 comprises a safety sensor configured to perform any of the described operations of Examples 1-21.

Example 24 comprises a mobile robot configured to perform any of the described operations of Examples 1-21.

Example 25 comprises a product comprising one or more tangible computer-readable non-transitory storage media comprising instructions operable to, when executed by at least one processor, enable the at least one processor to cause any of the described operations of Examples 1-21.

Example 26 comprises an apparatus comprising: a memory interface; and processing circuitry configured to: perform any of the described operations of Examples 1-21.

Example 27 comprises a method comprising any of the described operations of Examples 1-21.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a safety sensor for a mobile robot, the method comprising:
identifying an intended object to be carried by the mobile robot;
determining whether the intended object is detected based on sensor information from at least one sensor of the mobile robot; and
based on a determination that the intended object is detected, configuring a safety zone for the mobile robot based on one or more attributes of the intended object.

2. The method of claim 1 comprising identifying the intended object based on object information from a controller of the mobile robot.

3. The method of claim 2, wherein the object information from the controller of the mobile robot comprises detection criterion information to identify at least one criterion to detect the intended object, wherein determining whether the intended object is detected based on the sensor information comprises determining whether the intended object is detected based on whether the at least one criterion is met with respect to the sensor information.

4. The method of claim 2 or 3, comprising providing a detection error to the controller of the mobile robot based on a determination that the intended object is not detected.

5. The method of any one of claims 1-4, comprising processing the sensor information to detect one or more predefined object-identification attributes of the intended object, and determining that the intended object is detected based on a determination that the one or more predefined object-identification attributes are detected.

6. The method of claim 5, wherein the one or more predefined object-identification attributes comprises one or more leg attributes of one or more legs of the intended object, and/or one or more boundary attributes of one or more boundaries of the intended object.

7. The method of any one of claims 1-6, comprising configuring the safety zone for the mobile robot based on safety zone information from a controller of the mobile robot, the safety zone information corresponding to the intended object; and/or based on safety requirements corresponding to the one or more attributes of the intended object.

8. The method of any one of claims 1-7 comprising:
determining a first safety zone for the mobile robot based on one or more first attributes of a first intended object, based on a determination that the first intended object is detected based on first sensor information; and
determining a second safety zone for the mobile robot based on one or more second attributes of a second intended object, based on a determination that the second intended object is detected based on second sensor information, wherein the second safety zone is different from the first safety zone, the second intended object is different from the first intended object.

9. The method of any one of claims 1-8, comprising configuring one or more dimensions of the safety zone based on the one or more attributes of the intended object.

10. The method of any one of claims 1-9, wherein the one or more attributes of the intended object comprises at least one of a dimension of the intended object, a size of the intended object, a shape of the intended object, and/or a type of the intended object.

11. The method of any one of claims 1-10 comprising:
monitoring the sensor information to detect a hazard in the safety zone during movement of the mobile robot; and
generating an alert based on a determination that the hazard is detected in the safety zone.

12. An apparatus comprising a processor configured to perform the method of any one of claims 1-11.

13. The apparatus of claim 12, comprising the safety sensor for the mobile robot, the safety sensor comprising the processor, a memory to store information processed by the processor, and the at least one sensor.

14. The apparatus of claim 13, comprising the mobile robot, the mobile robot comprising:
the safety sensor; and
a controller to control one or more operations of the mobile robot based on safety information from the safety sensor.

15. A product comprising one or more tangible computer-readable non-transitory storage media comprising instructions operable to, when executed by at least one processor, enable the at least one processor to cause a safety sensor of a mobile robot to perform the method of any one of claims 1-11.
